(19) Europäisches Patentamt
European Patent Office
Office européen des brevets

(11) Veröffentlichungsnummer: **0 329 747 B1**

(12) **EUROPÄISCHE PATENTSCHRIFT**

(45) Veröffentlichungstag der Patentschrift:
11.09.91 Patentblatt 91/37

(51) Int. Cl.⁵: **B01J 15/00, B01J 19/24,**
**C01B 3/00, // B60K15/10**

(21) Anmeldenummer: 88907319.3

(22) Anmeldetag: 03.09.88

(86) Internationale Anmeldenummer:
PCT/EP88/00803

(87) Internationale Veröffentlichungsnummer:
WO 89/01823 09.03.89 Gazette 89/06

(54) **VORRICHTUNG ZUR DEHYDRIERUNG VON FLÜSSIGEN HYDRIDEN.**

(30) Priorität: 03.09.87 DE 3729526

(43) Veröffentlichungstag der Anmeldung:
30.08.89 Patentblatt 89/35

(45) Bekanntmachung des Hinweises auf die
Patenterteilung:
11.09.91 Patentblatt 91/37

(84) Benannte Vertragsstaaten:
AT CH DE FR GB IT LI NL SE

(56) Entgegenhaltungen:
CA-A- 1 146 725
DE-A- 3 618 225
GB-A- 2 057 908

(73) Patentinhaber: NASSER, Kamilia
Egenhofer Strasse 2
W-8039 Puchheim (DE)
Patentinhaber: NASSER, Mohamed
Eichenstrasse 6
W-8034 Germering (DE)

(72) Erfinder: NASSER, Gamal El Din
Egenhofer Str. 2
W-8039 Puchheim (DE)

(74) Vertreter: Herrmann-Trentepohl, Werner,
Dipl.-Ing. et al
Herrmann-Trentepohl, Kirschner, Grosse,
Bockhorni & Partner Forstenrieder Allee 59
W-8000 München 71 (DE)

## Beschreibung

Die Erfindung betrifft eine Vorrichtung zur Dehydrierung von flüssigen Hydriden, mit einem als Wärmetauscher ausgebildeten chemischen Reaktor zum Dehydrieren des erhitzten dampfförmigen Hydrids, einem Wärmetauscherfluid zum Erhitzen des Hydrids, mindestens einer Brennkammer zum Erhitzen des Wärmetauscherfluids durch Verbrennung von Wasserstoff, mindestens einem Wärmetauscher zum Erhitzen des dem Reaktor zugeführten Hydrids mittels des den Reaktor verlassenden Wärmetauscherfluids bzw. der den Reaktor verlassenden Dehydrierungsprodukte, mindestens einem Wärmetauscher zum Abkühlen der den Reaktor verlassenden Dehydrierungsprodukte, and mindestens einem Speicher für die den Reaktor verlassenden, abgekühlten Dehydrierungsprodukte.

Insbesondere bezieht sich die Erfindung auf eine solche Vorrichtung zur Dehydrierung von flüssigen Hydriden, die zum Antrieb von wasserstoffbetriebenen Kraftfahrzeugen geeignet ist.

Ein wesentliches Problem bei der Entwicklung von praxisgerechten Kraftfahrzeugen, die mittels wasserstoffbetriebener Verbrennungsmotoren angetrieben werden, stellt die geeignete Speicherung des Wasserstoffs am Fahrzeug dar. Hierbei hat es sich unter verschiedenen Gesichtspunkten als zweckmäßig erwiesen, auf die organisch-chemische Speicherung von Wasserstoff in Flüssighydriden zurückzugreifen. Als Flüssighydrid ist insbesondere Methylzyclohexan geeignet, welches eine bei normalem Druck und bei normaler Temperatur in einfachen Tanks speicherbare Flüssigkeit ist. Der Wasserstoff wird hierbei durch Hydrierung von Toluol in Methylzyclohexan gespeichert.

Das Methylzyclohexan wird als Flüssighydridspeicher vom Kraftfahrzeug getankt. Das Kraftfahrzeug umfaßt eine Dehydrieranlage, in der das Methylzyclohexan (MCH) unter Wärmeeinwirkung und unter der Wirkung eines geeigneten Katalysators in einem chemischen Reaktor in Toluol und Wasserstoff aufgespaltet wird. Der hierdurch gewonnene Wasserstoff wird zwischengespeichert und zum Großteil zum Antrieb des wasserstoffbetriebenen Verbrennungsmotors verwendet, zum Teil auch zum Erzeugen der für die Dehydrierung erforderlichen Hitze im Reaktor. Das bei der Dehydrierung ebenfalls erzeugte flüssige Toluol wird ebenfalls gespeichert und beim nächsten Tanken an die Zapfsäule zurückgegeben. Das Toluol kann anschließend in geeigneten Hydrieranlagen wiederum zu MCH hydriert werden, wodurch sich der Kreislauf schließt.

Es wurden geeignete Versuchsaufbauten entwickelt, welche zeigten, daß das vorgenannte Verfahren in der Praxis durchaus realisierbar ist. Allerdings ist bei diesen Versuchsaufbauten die Dehydrieranlage einschließlich der notwendigen Hilfs- und Meßeinrichtungen noch derart voluminös, daß sie den Raum einer Ladebrücke eines Lastwagens oder eines Anhängers einnimmt, was einer der wesentlichen Gründe darstellt, daß diese Technologie in der Praxis derzeit noch nicht anwendbar ist.

Der Erfindung liegt daher die Aufgabe zugrunde, eine Vorrichtung zur Dehydrierung von flüssigen Hydriden der eingangs genannten Gattung zu schaffen, welche sich insbesondere dadurch auszeichnet, daß sie kompakt, leichtgewichtig und kostengünstig herstellbar ist.

Diese Aufgabe wird erfindungsgemäß im wesentlichen dadurch gelöst, daß der chemische Reaktor und die Wärmetauscher jeweils plattenförmig ausgebildet sind, daß die plattenförmigen Wärmetauscher stapelförmig Seite an Seite angeordnet sind, daß an beiden stirnseitigen Enden des Wärmetauscherstapels je ein Speicher angeordnet ist und die beiden Speicher den Wärmetauscherstapel zwischen sich einschließen, daß beidseitig des Stapels als Zuganker wirkende Platten angeordnet sind, die an gegenüberliegenden Endbereichen an jeweils einem Speicher befestigt und vom Wärmetauscherstapel beabstandet angeordnet sind, und daß in dem zwischen den seitlichen Platten und den diesen gegenüberliegenden Seiten des Wärmetauscherstapels definierten Raum die mindestens eine Brennkammer sowie Umlenk- bzw. Verbindungskanäle, über die die verschiedenen Wärmetauscher untereinander verbunden sind, angeordnet sind.

Aufgrund der plattenförmigen Ausbildung der Wärmetauscher und ihrer stapelförmigen Anordnung wird eine äußerst raumsparende Konfiguration geschaffen. Nachdem das Reaktionsmedium unter einem Druck von 10 bis 20 bar steht, ist eine hohe Stabilität der Vorrichtung erforderlich. Diese hohe Stabilität wird auf konstruktiv besonders einfache Weise dadurch erreicht, daß das Wärmetauscherpaket zwischen den endseitigen Speichern angeordnet ist, welche aus ausreichend festem Material bestehen können, und daß die als Zuganker wirkenden, mit den Speichern verbundenen Seitenplatten die auf die Speicher einwirkenden Kräfte in einfacher Weise abfangen. Es können daher die plattenförmigen Wärmetauscher, in denen ein Betriebsdruck von etwa 20 bar herrscht, in kostengünstiger und materialsparender Weise aus dünnem Material gefertigt sein, nachdem die Druckkräfte von der das Wärmetauscherpaket klammerförmig umgebenden Speicher/Seitenplatten-Anordnung aufgenommen werden.

Eine besonders raum- und materialsparende Anordnung ergibt sich weiterhin dadurch, daß die zum Erhitzen des Wärmetauscherfluids durch Verbrennung von Wasserstoff dienenden Brennkammern sowie die Umlenk- bzw. Verbindungskanäle, über die die verschiedenen Wärmetauscher untereinander verbunden sind, in dem zwischen den seitlichen Platten und den diesen gegenüberliegenden Seiten des Wärmetauscherstapels definierten Raum angeordnet sind. Hierdurch ergeben sich im übrigen auch besonders kurze Wege für die verschiedenen Fluide, was auch einem hohen Wirkungsgrad der Vorrichtung dienlich ist.

In bevorzugter Ausbildung der Erfindung ist vorgesehen, daß die Speicher teilzylindrisch ausgebildet sind, wobei die Zylinderachse parallel zu den plattenförmigen Wärmetauschern verläuft, der Durchmesser des Teilzylinders größer als die Breite des Wärmetauscherstapels ist und der Teilzylinder sich in radialer Richtung über mehr als 180° erstreckt. Die teilzylindrischen Speicher ragen demnach zu beiden Seiten über den Wärmetauscherstapel hinaus, wobei die seitlichen Seitenplatten der Vorrichtung in etwa tangential an den teilzylindrischen Wänden des Speichers anliegen und hier mit diesen verschweißt sind. Die teilzylindrische Form der Speicher gewährleistet eine hohe mechanische Stabilität derselben bei gleichzeitig vergleichsweise dünner Wandstärke. In zweckmäßiger Weiterbildung der Erfindung ist vorgesehen, daß die Anordnung der Wärmetauscher derart ist, daß sich der chemische Reaktor in der Mitte des Wärmetauscherstapels befindet und daß sich hieran nach außen die weniger heißen Wärmetauscher anschließen. Bei Verwendung von mehreren Wärmetauschern kann insbesondere die mittlere Temperatur der einzelnen Wärmetauscher von innen nach außen abnehmen. Hierdurch werden Wärmeverluste gering gehalten und gleichzeitig Isolationsprobleme reduziert.

Gemäß einem besonders bevorzugten Merkmal der Erfindung ist die Vorrichtung derart symmetrisch aufgebaut, daß sich an den mittig angeordneten Reaktor beidseitig jeweils gleiche Wärmetauscherstufen anschließen. Hierbei sind demnach mit Ausnahme des Reaktors sämtliche übrigen Wärme tauscherstufen in identischer Weise zweifach vorgesehen und der Prozeß läuft zwischen dem zentralen Reaktor und den beiden randseitigen Speichern in beiden Richtungen zweimal in identischer Weise ab. Im einzelnen kann beidseitig des Reaktors je ein als Überhitzerstufe dienender Wärmetauscher angeordnet sein, hieran anschließend beidseitig je ein als Verdampferstufe dienender Wärmetauscher, hieran anschließend beidseitig je ein als Vorwärmstufe dienender Wärmetauscher und hieran anschließend beidseitig je ein als Kühlstufe bzw. Kondensator dienender Wärmetauscher. Der Kreislauf der Fluide ist hierbei derart, daß das Hydrid nacheinander die Vorwärmstufen, die Verdampferstufen, die Überhitzerstufen und den Reaktor durchläuft, daß nach der Dehydrierung des Hydrids die Dehydrierungsprodukte ($H_2$ und Toluol und nicht reagierbares MCH) die Überhitzerstufen, die Vorwärmstufen und die Kühlstufen durchlaufen, und daß das zum Erhitzen des Hydrids im Reaktor und in den Verdampferstufen dienende Wärmetauscherfluid, im Falle der Anwendung bei $H_2$-Verbrennungsmotoren die Motorenabluft, nach Durchlaufen des Reaktors die Verdampferstufen durchläuft.

Eine ganz besonders kompakte Vorrichtung mit sehr hohem Wirkungsgrad ergibt sich gemäß einem besonders bevorzugten Merkmal der Erfindung dann, wenn die plattenförmigen Wärmetauscher als Hybrid-Wärmetauscher an sich bekannter Art ausgebildet sind, die jeweils aus einer Mehrzahl von geprägten und miteinander verschweißten Formblechen bestehen, welche zwischen sich abwechselnd eine Vielzahl von parallelen rohrförmigen Strömungskanälen und eine Mehrzahl von senkrecht hierzu verlaufenden, spaltförmigen, wellenartig verlaufenden Kanälen definieren. Solche Hybrid-Wärmetauscher kombinieren die Temperatur- und Druckfestigkeit eines Rohraustauschers mit der kompakten und materialsparenden Bauweise eines Plattenaustauschers, wobei Heizflächendichten von bis zu 250 m² Austauschfläche pro Kubikmeter Bauvolumen realisierbar sind. Der wellenförmige Verlauf der querverlaufenden Strömungskanäle bewirkt große Turbulenzen und somit hervorragende Wärmeübergangsverhältnisse. Geeignete Hybrid-Wärmetauscher werden beispielsweise von der Firma IPG Bavaria, Industrieplanungsgesellschaft mbH für thermische Verfahrenstechnik, München, unter der Bezeichnung IPEX-Hybrid angeboten.

Weitere vorteilhafte Merkmale der Erfindung ergeben sich aus den übrigen Unteransprüchen sowie aus der nachfolgenden Beschreibung, in der ein bevorzugtes Ausführungsbeispiel der Erfindung anhand der Zeichnung näher beschrieben wird. In der Zeichnung zeigen :

Fig. 1     eine schematische Darstellung des Dehydrierungs-Prozesses bei der erfindungsgemäßen Vorrichtung,

Fig. 2     eine Seitenansicht der erfindungsgemäßen Vorrichtung in halbschematischer Darstellung,

Fig. 3     eine Draufsicht auf die erfindungsgemäße Vorrichtung in halbschematischer Darstellung,

Fig. 4     eine schematische Schnittdarstellung der einzelnen Wärmetauscherstufen der Vorrichtung gemäß Fig. 2, in Richtung des Pfeiles IV gesehen, wobei die einzelnen Wärmetauscherstufen seitlich nebeneinander liegend dargestellt sind und nur eine Hälfte der Vorrichtung dargestellt ist, und

Fig. 5     einen Schnitt durch einen Hybrid-Wärmetauscher der erfindungsgemäßen Vorrichtung.

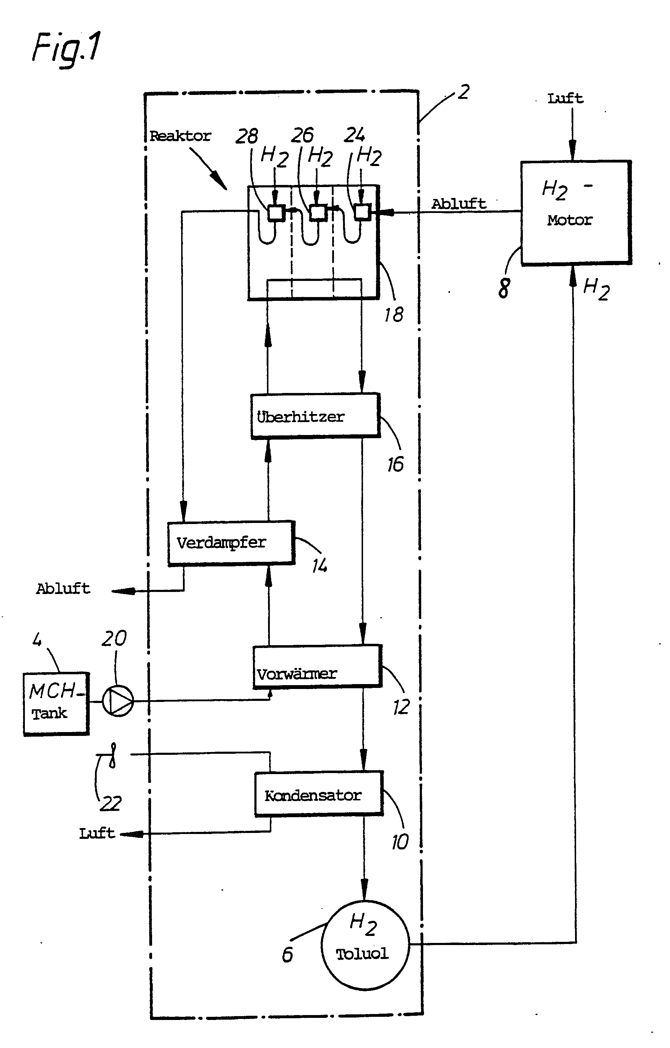

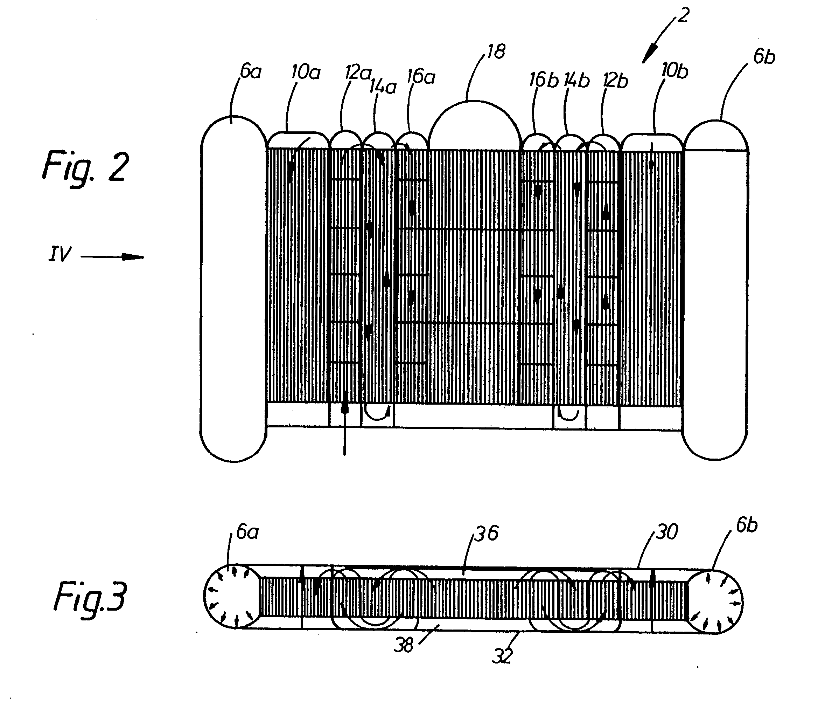

Zunächst wird auf das Prinzipschema gemäß Fig. 1 Bezug genommen. Es sei angemerkt, daß im Gegensatz zu den Darstellungen gemäß Fig. 2 und 3 im Falle des Prinzipschemas gemäß Fig. 1 jeweils eine einzige Wärmetauscherstufe dargestellt ist, während im Falle des Ausführungsbeispiels gemäß Fig. 2 bis 4 jeweils zwei identische Wärmetauscherstufen vorgesehen sind. Im Falle der Fig. 1 wurde jedoch der Übersichtlichkeit halber auf die Darstellung des zweiten Satzes an Wärmetauscherstufen verzichtet.

In Fig. 1 ist mit der Bezugsziffer 2 eine Dehydrierungsvorrichtung bezeichnet, welche zur Dehydrierung des in einem Fahrzeugtank 4 gespeicherten flüssigen Hydrids, nämlich Methylzyclohexan (MCH) dient. In der Dehydrierungsvorrichtung 2 wird das vom Tank 4 der Dehydrierungsvorrichtung 2 unter Druck von etwa 20 bar zugeführte MCH, welches einen organischen Wasserstoffträger darstellt, unter Wärmezufuhr katalytisch in Wasserstoff und Toluol aufgespalten. Der durch diesen Prozeß gewonnene Wasserstoff wird in einem Speicher 6 zwischengespeichert und zum Betrieb des das Kraftfahrzeug wie beispielsweise einen Lastkraftwagen antreibenden Wasserstoffmotors 8 eingesetzt. Die heiße Abluft des Wasserstoffmotors 8 wird der Dehydriervorrichtung 2 zugeführt, um den Reaktor zu erhitzen. Nachdem die von den Motorabgasen auf die Dehydrierungsvorrichtung 2 übertragene Wärme nicht ausreicht, um den Wärmebedarf der Dehydrieranlage zu decken, wird das Wärmedefizit in der Dehydrierungsvorrichtung durch Verbrennen eines Teils des erzeugten Wasserstoffs gedeckt.

Im folgenden wird auf die in Fig. 1 dargestellten Kreisläufe näher eingegangen.

Die Dehydrierungsvorrichtung 2 umfaßt eine Kondensatorstufe 10, eine Vorwärmstufe 12, eine Verdampferstufe 14, eine Überhitzerstufe 16 und einen chemischen Reaktor 18. Das im Tank 4 befindliche MCH wird über die Pumpe 20 unter einem Druck von ungefähr 20 bar der Dehydrierungsvorrichtung 2 zugeführt, wo es zunächst die als Wärmetauscher ausgebildete Vorwärmstufe 12 durchläuft, in der es auf eine Temperatur von etwa 235°C vorgewärmt wird. Anschließend durchläuft das vorgewärmte MCH die ebenfalls als Wärmetauscher ausgebildete Verdampferstufe 14, in der das bis zu diesem Zeitpunkt flüssige MCH weiter erhitzt und verdampft wird. Der MCH-Dampf wird anschließend durch die als Wärmetauscher ausgebildete Überhitzerstufe 16 geleitet, in der der Dampf weiter bis knapp unter die Reaktionstemperatur auf etwa 390°C überhitzt wird. Der überhitzte Dampf betritt anschließend den Reaktor 18, in welchem er katalytisch unter zusätzlicher Wärmezufuhr dehydriert wird, wobei als Dehydrierungsprodukte im wesentlichen Wasserstoff und dampfförmiges Toluol entstehen.

Das aus dem Reaktor 18 abgeführte Wasserstoff-Toluol-Gemisch, welches nunmehr eine Temperatur von etwas 420°C aufweist, wird wiederum der Überhitzerstufe 16 zugeführt, wo es einen Teil seiner Wärme an das zu überhitzende MCH abgibt. Das Wasserstoff-Toluol-Gemisch weist nach Verlassen der Überhitzerstufe 16 eine Temperatur von etwa 250°C auf und wird anschließend der Vorwärmstufe 12 zugeführt, in der es das aus dem Tank 4 kommende flüssige MCH vorwärmt. Schließlich durchläuft das weiter abgekühlte Wasserstoff-Toluol-Gemisch die Kondensatorstufe 10, in der das Toluol weiter abgekühlt und kondensiert wird. Als Kühlmedium für die Kondensatorstufe 10 ist im Falle des hier beschriebenen Ausführungsbeispiels Luft vorgesehen, welche über ein Gebläse 22 dem Wärmetauscher 10 zugeführt wird. In alternativer Weise könnte als Kühlmedium selbstverständlich beispielsweise auch Kühlwasser dienen.

Die auf etwa 30°C abgekühlten Dehydrierungsprodukte, nämlich im wesentlichen Wasserstoff und Toluol, werden letztlich im Speicher 6 gespeichert bzw. zwischengespeichert, wobei sich Toluol im flüssigen und Wasserstoff im gasförmigen Zustand befinden. Zusätzlich kann, falls dies gewünscht wird, in nicht näher dargestellter Weise das toluol vom Wasserstoff abgeschieden werden.

Zum Erhitzen des Reaktors 18 wird diesem heiße Abluft aus dem Wasserstoffmotor zugeführt. Da, wie bereits erwähnt, die Temperatur der Abluft des Wasserstoffmotors nicht ausreicht, um den Wärmebedarf des Reaktors 18 zu decken, wird in geeigneten Verbrennungsräumen 24, 26 und 28 des Reaktors 18 zusätzlich Wasserstoff verbrannt, um auf diese Weise die Temperatur der Abluft vom Wasserstoffmotor auf etwa 650°C anzuheben. Um eine gleichmäßige Verteilung der Wärme über den gesamten Reaktor zu gewährleisten, ist dieser insgesamt dreistufig ausgebildet, wobei jede Stufe eine Brennkammer 24 bzw. 26 bzw. 28 umfaßt, in der die auf etwa 420°C abgekühlte Abluft wiederum auf 650°C erhitzt wird.

Nach Durchlauf durch den Reaktor 18 durchströmt die Abluft des Wasserstoffmotors den Verdampfer 14, in der sie unter Wärmeabgabe an das MCH auf etwa 330°C abgekühlt wird. Anschließend wird die Abluft in die Atmosphäre abgeführt.

Im folgenden wird auf die Fig. 2 bis 5 Bezug genommen.

Wie aus den Fig. 2 und 3 ersichtlich, besteht die Dehydrierungsvorrichtung 2 aus einem einheitlichen Block. Sie umfaßt den mittig angeordneten Reaktor 18, an den sich beidseitig je eine Überhitzerstufe 16a, 16b, eine Verdampferstufe 14a, 14b, eine Vorwärmstufe 12a, 12b, eine Kondensatorstufe 10a, 10b und ein Speicher 6a, 6b anschließen. Jede der Stufen 10a, 10b, 12a, 12b, 14a, 14b, 16a und 16b sowie der Reaktor 18 sind als plattenförmiger Wärmetauscher ausgebildet und weisen in Blickrichtung des Pfeiles IV gemäß Fig. 2 im wesentlichen dieselben Abmessungen auf. Die einzelnen, plattenförmigen Wärmetauscher sind stapelförmig Seite an Seite angeordnet, so daß sie einen einheitlichen Block bilden, wie aus den Fig. 2 und 3 deutlich erkennbar ist. An den beiden Enden des Wärmetauscherblocks ist jeweils ein Speicher 6a, 6b angeordnet, der jeweils teilzylindrisch ausgebildet ist und dessen Achse sich parallel zur Längsseite der einzelnen Wärmetauscherplatten erstreckt. Der Durchmesser der teilzylindrischen Speicher 6a, 6b ist, wie deutlich aus Fig. 3 ersichtlich ist, größer als die Tiefe des Wärmetauscherpakets, so daß die Speicher 6a, 6b das Wärmetauscherpaket seitlich über-

4

ragen. Es sind Seitenplatten 30, 32 vorgesehen, welche parallel zu den Seitenflächen des Wärmetauscherpaketes verlaufen und an ihren beiden, den Speichern 6a, 6b zugewandten Kanten derart an diesen Speichern festgeschweißt sind, daß die Seitenplatten 30, 32 in etwa tangential zu den teilzylindrischen Speichern 6a, 6b verlaufen. Den einzelnen Wärmetauschern zugeordnete Kopfstücke schließen, wie aus Fig. 2 ersichtlich, die Wärmetauscher nach oben ab. Eine untere Abschlußplatten 34 ist stirnseitig an den Speichern 6a, 6b und entlang ihrer Längsseiten an den Seitenplatten 30, 32 festgeschweißt und schließt das Wärmetauscherpaket nach unten ab.

Wie weiter unten noch näher erläutert werden wird, bestehen die einzelnen Wärmetauscher 10a bis 16b sowie der Reaktor 18 aus einzelnen, vergleichsweise dünnen Plattengliedern, welche nicht in der Lage sind, den im Wärmetauscherpaket herrschenden hohen Betriebsdruck ohne zusätzliche Abstützung aufzunehmen. Im Falle der erfindungsgemäßen Anordnung wird der Druck von den beiden endseitig angeordneten Speichern 6a, 6b aufgenommen, welche aus ausreichend festem Material gebildet sind und aufgrund ihrer zylindrischen Konfiguration ohnehin eine hohe Eigenstabilität aufweisen. Die die beiden Speicher 6a, 6b verbindenden Seitenplatten 30, 32 dienen hierbei als Zuganker zwischen den beiden Speichern 6a, 6b, wodurch das Wärmetauscherpaket von den beiden Speichern und den beiden Seitenplatten umklammert wird und hierdurch auf einfachste Weise die auftretenden Druckkräfte von der Dehydrierungsvorrichtung aufgenommen werden.

In den zwischen den Seitenplatten 30, 32 und den gegenüberliegenden Seitenwänden des Wärmetauscherpakets vorhandenen Räumen 36, 38 sind die Führungs- und Umlenkkanäle für die durch die einzelnen Wärmetauscher strömenden Fluide sowie die Brennkammern 24 bis 28 angeordnet.

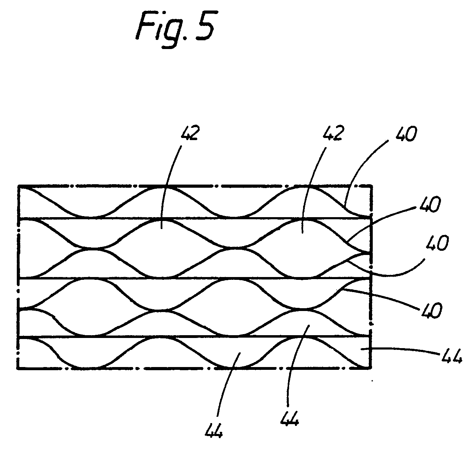

Die einzelnen Wärmetauscher 10a bis 16b und 18 bestehen jeweils aus Hybrid-Wärmetauschern, wie sie im Querschnitt in Fig. 5 skizziert sind. Jeder Wärmetauscher besteht aus mehreren, miteinander verschweißten Plattenelementen 40, welche Prägungen aufweisen derart, daß ein verschweißtes Plattenpaket in der einen Richtung, im Falle der Schnittansicht gemäß Fig. 5 in Richtung senkrecht zur Zeichenebene, rohrartige Strömungsmittelkanäle und in einer hierzu quer verlaufenden Richtung, im Falle der Darstellung gemäß Fig. 5 in horizontaler Richtung, spaltenförmige Strömungsmittelkanäle aufweist, die sich wellenförmig von der einen zur anderen Seite des Plattenpakets erstrecken. Die rohrartigen Strömungsmittelkanäle 42 werden im folgenden als Rohre bezeichnet, die spaltenförmigen, wellenartig ausgebildeten Strömungsmittelkanäle als Spalten.

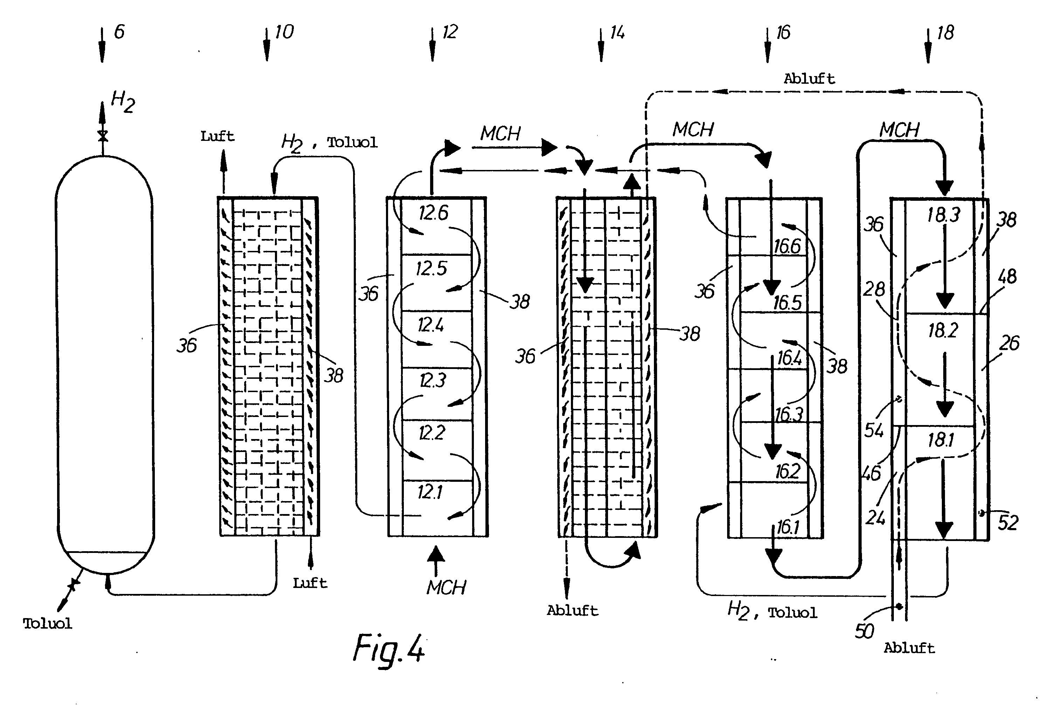

Im folgenden wird auf die Darstellung gemäß Fig. 4 Bezug genommen. In Fig. 4 ist lediglich eine Hälfte der Anordnung gemäß Fig. 2 und 3 dargestellt ; die andere Hälfte ist jedoch vollkommen identisch aufgebaut, so daß die Erläuterung der einen Hälfte für das Verständnis der Erfindung ausreicht.

Das vom Tank 4 (vgl. Fig. 1) der Dehydriervorrichtung 2 zugeführte MCH betritt die Vorwärmstufe 12 von unten und durchläuft die in vertikaler Richtung ausgerichteten Spalten des Wärmetauschers. Der Wärmetauscher der Vorwärmstufe 12 besteht aus sechs übereinander angeordneten Abteilen 12.1, 12.2, 12.3, 12.4, 12.5 und 12.6, deren Spalten miteinander in Verbindung stehen. Die Rohre sind hierbei waagrecht angeordnet und jedes Abteil wird, beginnend vom oberen Abteil 12.6 und endend mit dem unteren Abteil 12.1 nacheinander von dem von der Überhitzerstufe 16 kommenden Dehydrierungsprodukten durchströmt. Wie durch die Pfeile dargestellt, verläuft die Strömung der Dehydrierungsprodukte in der Vorwärmstufe 12 insgesamt serpentinenförmig von oben nach unten, so daß die Vorwärmstufe 12 von den beiden Komponenten insgesamt im Gegenstromprinzip durchströmt wird. In den seitlichen Räumen 36, 38 sind geeignete Führungsbleche angeordnet (und an den entsprechenden Stellen der Plattenelemente sind Flachprägungen vorgesehen,) um die serpentinenartige Durchströmung der einzelnen Abteile 12.1 bis 12.6 zu erzwingen.

Das vorerwärmte MCH verläßt die Vorwärmstufe 12 an deren Oberseite und wird anschließend der Oberseite der Verdampferstufe 14 zugeführt. In dieser Verdampferstufe sind die Spalten des Wärmetauschers ebenfalls vertikal verlaufend und die Rohre quer hierzu in horizontaler Richtung verlaufend angeordnet. Das MCH durchströmt die Verdampferstufe 14 zunächst von oben nach unten und anschließend an der gegenüberliegenden Seite des Wärmetauschers von unten nach oben. Aufgrund von an den Plattenelementen mittig ausgebildeten Flachprägungen wird erreicht, daß der in Fig. 4 linke Bereich des Wärmetauschers vom rechten Bereich getrennt ist.

Die aus dem Reaktor 18 stammende, erhitzte Abluft strömt von oben über den Raum 38 in die Verdampferstufe 14 ein und gelangt nach Durchströmen der Rohre des Wärmetauschers in den Raum 36, von wo sie nach außen in die Atmosphäre abgeführt wird.

Das die Verdampferstufe 14 verlassende, nunmehr dampfförmige MCH wird der Überhitzerstufe 16 von oben zugeführt und es verläßt diese an ihrem unteren Ende. Der Aufbau der Überhitzerstufe 16 entspricht demjenigen der Vorwärmstufe 12 ; insbesondere umfaßt die Überhitzerstufe 16 ebenfalls sechs Abteile 16.1 bis 16.6, welche übereinanderliegend angeordnet sind und von den den Reaktor 18 verlassenden Dehydrierungsprodukten von unten nach oben mäanderförmig durchströmt werden. Auch die Überhitzerstufe 16 wird von den beiden Komponenten insgesamt im Gegenstrom durchflossen.

Das an der Unterseite der Überhitzerstufe 16 austretende, dampfförmige MCH wird anschließend von der Oberseite her dem Reaktor 18 zugeführt, bei dem die Spalten des Wärmetauschers wiederum vertikal verlaufend angeordnet sind, so daß das MCH den Reaktor wellenförmig von oben nach unten durchläuft. Der Reaktor 18 ist in drei übereinanderliegenden Stufen 18.1, 18.2 und 18.3 aufgebaut, wobei jede Stufe 18.1 bis 18.3 nacheinander von der vom Wasserstoffmotor zugeführten Abluft nacheinander durchströmt wird. Über in den Räumen 36, 38 angeordnete Leitbleche wird die Abluft durch aufeinanderfolgende Stufen in jeweils entgegengesetzter Strömungsrichtung gelenkt. Die in den Räumen 36, 38 angeordneten Umlenkbleche 46, 48 definieren Kammern 24, 26 und 28, in die im jeweils unten gelegenen Bereich Wasserstoff-Zuleitungen 50, 52, 54 münden. In diesen Brennkammern 24, 26 und 28 wird somit zusätzlich Wasserstoff verbrannt, um, wie weiter oben beschrieben, die aus dem Wasserstoffmotor zugeführte Abluft auf die erforderliche Reaktionstemperatur zu erhitzen.

Wie aus der Darstellung gemäß Fig. 4 ersichtlich, wird der Reaktor 18 insgesamt ebenfalls im Gegenstrom betrieben.

Die die Vorwärmstufe 12 an ihrem unteren Ende verlassenden Dehydrierungsprodukte, nämlich insbesondere Wasserstoff und Toluol, werden der Oberseite der Kondensatorstufe 10 zugeführt, deren Wärmetauscher vertikale, durchgehende Spalten und horizontale Rohre aufweist. Zur Kühlung des Wasserstoff-Toluol-Gemischs wird den Rohren des Wärmetauschers 10 über den Raum 38 von unten mittels eines Gebläses Frischluft zugeführt, welche den Wärmetauscher von rechts nach links durchläuft, im Raum 36 gesammelt wird und nach oben in die Atmosphäre abgeführt wird.

Schließlich wird das in der Kondensatorstufe 10 gekühlte Gemisch aus Wasserstoff und Toluol an der Unterseite dieser Stufe abgeführt und dem Speicher 6 zugeführt, in dem der Wasserstoff zur weiteren Verwendung zwischengespeichert wird.

BEZUGSZEICHENLISTE

| | |
|---|---|
| 2 | Dehydrierungsvorrichtung |
| 4 | Tank |
| 6 | Speicher |
| 8 | Wasserstoffmotor |
| 10 | Kondensatorstufe |
| 12 | Vorwärmstufe |
| 14 | Verdampferstufe |
| 16 | Überhitzerstufe |
| 18 | Reaktor |
| 20 | Pumpe |
| 22 | Gebläse |
| 24 | Brennkammer |
| 26 | Brennkammer |
| 28 | Brennkammer |
| 30 | Seitenplatte |
| 32 | Seitenplatte |
| 34 | Abschlußplatte |
| 36 | Raum |
| 38 | Raum |
| 40 | Plattenelement |
| 42 | Rohre |
| 44 | Spalten |
| 46 | Umlenkblech |
| 48 | Umlenkblech |

**Patentansprüche**

1. Vorrichtung zur Dehydrierung von flüssigen Hydriden, mit
— einem als Wärmetauscher ausgebildeten chemischen Reaktor zum Dehydrieren des erhitzten dampfförmigen Hydrids,
— einem Wärmetauscherfluid zum Erhitzen des Hydrids,

— mindestens einer Brennkammer zum Erhitzen des Wärmetauscherfluids durch Verbrennung von Wasserstoff,

— mindestens einem Wärmetauscher zum Erhitzen des dem Reaktor zugeführten Hydrids mittels des den Reaktor verlassenden Wärmetauscherfluids bzw. der den Reaktor verlassenden Dehydrierungsprodukte,

— mindestens einem Wärmetauscher zum Abkühlen der den Reaktor verlassenden Dehydrierungsprodukte, und

— mindestens einem Speicher für die den Reaktor verlassenden, abgekühlten Dehydrierungsprodukte, **dadurch gekennzeichnet,**

— daß der chemische Reaktor (18) und die Wärmetauscher (10, 12, 14, 16) jeweils plattenförmig ausgebildet sind,

— daß die plattenförmigen Wärmetauscher (10 bis 18) stapelförmig Seite an Seite angeordnet sind,

— daß an beiden stirnseitigen Enden des Wärmetauscherstapels je ein Speicher (6a, 6b) angeordnet ist und die beiden Speicher (6a, 6b) den Wärmetauscherstapel zwischen sich einschließen,

— daß beidseitig des Stapels als Zuganker wirkende Platten (30, 32) angeordnet sind, die an gegenüberliegenden Endbereichen an jeweils einem Speicher (6a, 6b) befestigt und vom Wärmetauscherstapel beabstandet angeordnet sind, und

— daß in dem zwischen den seitlichen Platten (30, 32) und den diesen gegenüberliegenden Seiten des Wärmetauscherstapels definierten Raum (36, 38) die mindestens eine Brennkammer (24, 26, 28) sowie Umlenk- bzw. Verbindungskanäle, über die die verschiedenen Wärmetauscher (10 bis 18) untereinander verbunden sind, angeordnet sind.

2. Vorrichtung nach Anspruch 1, dadurch gekennzeichnet, daß die Speicher (6a, 6b) teilzylindrisch ausgebildet sind, wobei die Zylinderachse parallel zu den plattenförmigen Wärmetauschern (10 bis 18) verläuft, der Durchmesser des Teilzylinders größer als die Breite des Wärmetauscherstapels ist und sich der Teilzylinder über mehr als 180° erstreckt.

3. Vorrichtung nach Anspruch 1 oder 2, dadurch gekennzeichnet, daß die Anordnung der Wärmetauscher (10 bis 18) derart ist, daß sich der chemische Reaktor (18) in der Mitte des Wärmetauscherstapels befindet und daß sich hieran nach außen die weniger heißen Wärmetauscher (10 bis 16) anschließen.

4. Vorrichtung nach Anspruch 3, dadurch gekennzeichnet, daß bei Verwendung mehrerer Wärmetauscher (10 bis 16) die Temperatur der einzelnen Wärmetauscher von innen nach außen abnimmt.

5. Vorrichtung nach Anspruch 3 oder 4, dadurch gekennzeichnet, daß sie symmetrisch aufgebaut ist derart, daß sich an den mittig angeordneten Reaktor (18) beidseitig jeweils gleich Wärmetauscherstufen (16a, 16b ; 14a, 14b ; 12a, 12b ; 10a, 10b) anschließen.

6. Vorrichtung nach einem der vorhergehenden Ansprüche, wobei das Hydrid bzw. die Dehydrierungsprodukte nacheinander eine Vorwärmstufe, eine Verdampferstufe, eine Überhitzerstufe, den Reaktor, die Überhitzerstufe und die Vorwärmstufe durchlaufen und das Wärmetauscherfluid nacheinander den Reaktor und die Verdampferstufe durchläuft, dadurch gekennzeichnet, daß beidseitig des Reaktors je ein als Überhitzerstufe (16) dienender Wärmetauscher (16a, 16b), hieran anschließend je ein als Verdampferstufe (14) dienender Wärmetauscher (14a, 14b), und hieran anschließend je ein als Vorwärmstufe (12) dienender Wärmetauscher (12a, 12b) angeordnet sind.

7. Vorrichtung nach Anspruch 6, dadurch gekennzeichnet, daß an die als Vorwärmstufe (12) dienenden Wärmetauscher (12a, 12b) anschließend beidseitig je ein als Kühlstufe (10) für die Dehydrierungsprodukte dienender Wärmetauscher (10a, 10b) angeordnet ist.

8. Vorrichtung nach einem der vorhergehenden Ansprüche, dadurch gekennzeichnet, daß vorzugsweise mehrere der Wärmetauscher (12, 16, 18) insgesamt im Gegenstrom betrieben werden.

9. Vorrichtung nach einem der vorhergehenden Ansprüche, dadurch gekennzeichnet, daß die plattenförmigen Wärmetauscher (10 bis 18) als Hybrid-Wärmetauscher an sich bekannter Art ausgebildet sind, die jeweils aus einer Mehrzahl von geprägten und miteinander verschweißten Formblechen (40) bestehen, welche zwischen sich abwechselnd eine Vielzahl von parallelen rohrförmigen Strömungsmittelkanälen (42) und eine Mehrzahl von senkrecht hierzu verlaufenden, spaltförmigen, wellenartig verlaufenden Kanälen (44) definieren.

## Claims

1. Device for dehydrating liquid hydrides, comprising

— a chemical reactor designed as a heat exchanger for dehydrating the heated vaporous hydride,

— a heat exchange fluid for heating the hydride,

— at least one combustion chamber for heating the heat exchange fluid by burning hydrogen,

— at least one heat exchanger for heating the hydride fed to the reactor by means of the heat exchange fluid flowing out of the reactor and the dehydrated products issuing from the reactor respectively,
— at least one heat exchanger for cooling the dehydrated products issuing from the reactor, and
— at least one storage element for the cooled off dehydrated products issuing from the reactor,
**characterized in**
— that the chemical reactor (18) and the heat exchangers (10, 12, 14, 16) each have a plate-like form,
— that the plate-like heat exchangers (10 to 18) are arranged side by side in a stack-like manner,
— that on each face end of the heat exchanger stack there is arranged a storage element (6a, 6b) and that said two storage elements (6a, 6b) enclose the heat exchanger stack,
— that on both sides of the stack there are arranged plates (30, 32) acting as tension rods which are mounted on opposite end sections to one storage element (6a, 6b) respectively and are arranged at a distance from the heat exchanger stack, and
— that in the space (36, 38) defined between the lateral plates (30, 32) and the sides of the heat exchanger stack opposed thereto there are arranged the at least one combustion chamber (24, 26, 28) as well as deflection and junction channels by means of which the various heat exchangers (10 to 18) are interconnected.

2. Device according to claim 1, **characterized in that** the storage elements (6a, 6b) are partly cylindrical, the cylinder axis being parallel to the plate-like heat exchangers (10 to 18), the diameter of the partial cylinder being larger than the width of the heat exchanger stack, and the partial cylinder extending over more than 180°.

3. Device according to claim 1 or 2, **characterized in that** the heat exchangers (10 to 18) are arranged in such a way that the chemical reactor (18) is located in the center of the heat exchanger stack and that adjacent thereto there are arranged to the outside the less heated heat exchangers (10 to 16).

4. Device according to claim 3, **characterized in that** when using a plurality of heat exchangers (10 to 16), the temperature of the individual heat exchangers decreases from the inside to the outside.

5. Device according to claim 3 or 4, **characterized in that** the structure thereof is symmetrical in such a way that adjacent to the centered reactor (18) there are arranged on both sides identical heat exchanger stages (16a, 16b ; 14a, 14b ; 12a, 12b ; 10a, 10b).

6. Device according to one of the preceding claims, with the hydride and the dehydrated products respectively passing successively through a preheating stage, an evaporating stage, a superheating stage, the reactor, the superheating stage and the preheating stage, and the heat exchange fluid passing successively through the reactor and the evaporating stage, **characterized in that** on both sides of the reactor there are arranged a heat exchanger (16a, 16b) serving as a superheating stage (16), and adjacent thereto a heat exchanger (14, 14b) serving as an evaporating stage (14), and adjacent thereto a heat exchanger (12a, 12b) serving as preheating stage (12).

7. Device according to claim 6, **characterized in that** adjacent to the heat exchangers (12a, 12b) serving as preheating stage (12) there is arranged on both sides a heat exchanger (10a, 10b) serving as cooling stage (10) for the dehydrated products.

8. Device according to one of the preceding claims, **characterized in that** preferably a plurality of the heat exchangers (12, 16, 18) is as a whole operated on the reverse flow principle.

9. Device according to one of the preceding claims, **characterized in that** the plate-like heat exchangers (10 to 18) are designed as hybrid heat exchangers known per se, comprising a plurality of embossed profiled sheet metals (40) welded together, said profiled sheet metals (40) defining between them alternately a plurality of parallel tubular flow means channels (42) and, extending vertically thereto, a plurality of slot-like undulated channels (44).

## Revendications

1. Dispositif pour déshydrater des hydrures liquides, comprenant
— un réacteur chimique formé en échangeur thermique pour déshydrater l'hydrure échauffé à l'état de vapeur
— un fluide échangeur thermique pour échauffer l'hydrure
— une chambre de combustion au moins pour échauffer le fluide échangeur thermique par combustion d'hydrogène
— un échangeur thermique au moins pour échauffer l'hydrure amené au réacteur, l'échauffement ayant lieu au moyen du fluide échangeur thermique sortant du réacteur ou bien au moyen des produits de la déshydrogénation sortant du réacteur
— un échangeur thermique au moins pour refroidir les produits de déshydrogénation sortant du réacteur, et
— un réservoir au moins pour les produits de déshydratation refroidis sortant du réacteur,

**caractérisé en ce que**

— le réacteur chimique (18) et les échangeurs thermiques (10, 12, 14, 16) ont la forme des plaques

— les échangeurs thermiques en forme de plaques (10-18) sont arrangés côté à côté en forme de pile,

— aux deux bouts frontaux du pile des échangeurs thermiques il est placé un réservoir (6a, 6b) et les deux réservoirs (6a, 6b) enferment le pile des échangeurs thermiques,

— des deux côtés du pile il est placé des plaques (30, 32) agissant comme tirants d'ancrage, plaques qui sont fixées chacune à un réservoir (6a, 6b) à des régions finales opposées et qui sont arrangées à distance au pile des échangeurs thermiques, et

— dans l'espace (36, 38) se trouvant entre les plaques latérales (30, 32) et les côtés du pile des échangeurs thermiques opposées à ces plaques il se trouve la ou les chambre(s) de combustion (24, 26, 28) et les canaux de déflection et de raccordement, par lesquels les différents échangeurs thermiques (10-18) sont raccordés entre eux.

2. Dispositif selon revendication 1, caractérisé en ce que les réservoirs (6a, 6b) ont la forme des cylindres primitifs de référence, l'axe du cylindre étant parallèle aux échangeurs thermiques (10-18) en forme de plaques, le diamètre du cylindre primitif de référence excédant la largeur du pile des échangeurs thermiques et le cylindre primitif de référence s'étendant sur plus de 180°.

3. Dispositif selon revendication 1 ou 2, caractérisé en ce que les échangeurs thermiques (10-18) sont arrangés de façon que le réacteur chimique (18) se trouve au milieu du pile des échangeurs thermiques et que les échangeurs thermiques moins chauds (10-16) se rattachent vers l'extérieur.

4. Dispositif selon revendication 3, caractérisé en ce que lors de l'utilisation de plusieurs échangeurs thermiques (10-16) la température des divers échangeurs thermiques diminue de l'intérieur vers l'extérieur.

5. Dispositif selon revendication 3 ou 4, caractérisé en ce qu'il est construit symétriquement de façon que des niveaux pareils d'échangeurs thermiques (16a, 16b ; 14a, 14b ; 12a, 12b ; 10a, 10b) se raccordent de chaque côté du réacteur (18) arrangé centralement.

6. Dispositif selon l'un des revendications précédentes, l'hydrure ou les produits de la déshydrogénation passant successivement une passe de préchauffement, une passe de vaporisation, une passe de surchauffement, le réacteur, le passe de surchauffement et le passe de préchauffement et le fluide échangeur thermique passant successivement le réacteur et le passe de vaporisation, caractérisé en ce qu' il est arrangé à chaque côté du réacteur un échangeur thermique (16a, 16b) servant de passe de surchauffement (16), ensuite un échangeur thermique (14a, 14b)) servant de passe de vaporisation (14), ensuite un échangeur thermique (12a, 12b) servant de passe de préchauffement (12).

7. Dispositif selon revendication 6, caractérisé en ce qu'aux échangeurs thermiques (12a, 12b) servant de passe de préchauffement (12) il se rattache à chaque côté un échangeur thermique (10a, 10b) servant de passe de refroidissement (10) des produits de déshydrogénation.

8. Dispositif selon l'une des revendications précédentes, caractérisé en ce que, de préférence, plusieurs des échangeurs thermiques (12, 16, 18) sont opérés, dans l'ensemble, en contre-courant.

9. Dispositif selon l'une des revendications précédentes, caractérisé en ce que les échangeurs thermiques en forme de plaque (10-18) sont des échangeurs thermiques hybrides de façon connue, chacun comprenant plusieurs tôles (40) profilées estampées et soudées, définissant entre eux alternativement un grand nombre de canaux de moyen d'écoulement (42) en forme de tubes parallèles et, verticalement à ces canaux, un grand nombre de canaux (44) en forme de fissures ondulés.

Fig.1

Fig. 2

IV ⟶

6a 10a 12a 14a 16a 18 16b 14b 12b 10b 6b

2

Fig.3

6a 36 30 6b

38 32

EP 0 329 747 B1

Fig.4

# Fig. 5